# EUROPÄISCHE PATENTSCHRIFT

(11) **EP 3 265 967 B1**
(45) Veröffentlichungstag und Bekanntmachung des Hinweises auf die Patenterteilung: **08.05.2019**
(21) Anmeldenummer: 16711134.3
(22) Anmeldetag: 04.03.2016
(51) Int. Cl.: G06Q 10/08, B60R 9/00, G06Q 50/28, G07C 9/00, B60R 9/06, B60R 9/02

(54) **SYSTEM UND VERFAHREN ZUM EMPFANG VON WAREN**
DEVICE AND METHOD FOR RECEIVING GOODS
SYSTÈME ET PROCÉDÉ DE RÉCEPTION DE MARCHANDISES

(30) Priorität: 06.03.2015 DE 102015002796
(43) Veröffentlichungstag der Anmeldung: 10.01.2018
(73) Patentinhaber: Deutsche Telekom AG, 53113 Bonn (DE)
(72) Erfinder: HEINZ, Sebastian, 53227 Bonn (DE); SCHMIDT-GABRIEL, Michael, 82234 Wessling (DE); SCHOLL, Johannes, 80686 München (DE); HINTZPETER, Reimer, 20249 Hamburg (DE)
(74) Vertreter: Cohausz Hannig Borkowski Wißgott
(86) Internationale Anmeldenummer: PCT/EP2016/000383
(87) Internationale Veröffentlichungsnummer: WO 2016/142047

(56) Entgegenhaltungen:
- WO-A1-02/14108
- WO-A1-2014/154344
- GB-A- 1 154 671
- US-A- 4 957 228
- US-A1- 2009 101 685
- US-A1- 2009 189 404

## Beschreibung

Die Erfindung betrifft ein Verfahren zum Empfang von Waren aus einem Auslieferungslager oder von einem sonstigen Warenversender, bei dem außen an der Karosserie eines von der Person genutzten Fahrzeugs eine Warenempfangsbox zumindest temporär angeordnet wird und eine von der Person benötigte/gewünschte Ware aus dem Auslieferungslager oder von dem sonstigen Warenversender an den Ort des geparkten Fahrzeugs transportiert und in die Warenempfangsbox eingelegt wird. Die Erfindung betrifft auch ein System zum Empfang von Waren.

Ein solches Verfahren und System ist z.B. bekannt aus den Dokumenten WO 02/14108 A1, US 4 957 228 A und US 2009/189404 A1.

Das Empfangen von jeglichen Waren ist im Stand der Technik allgemein bekannt und erfolgt in üblicher Weise dadurch, dass eine Ware von einem Warenversender zu einer Person versendet wird, z.B. durch einen Versanddienstleister oder aber im einfachsten Fall, dass eine Ware von einer Person direkt abgeholt wird, zum Beispiel bei einem Auslieferungslager. WO2014/154344 A1 zeigt ein weiteres Beispiel von Warenempfang

Im geschäftlichen Bereich liegt ein typischer Fall dadurch vor, dass zum Beispiel im Außendienst tätige Personen zum Kunden Waren mitbringen müssen, um diese Waren dem Kunden zu verkaufen oder um diese beim Kunden zu installieren oder zumindest um diese beim Kunden zu nutzen, z.B. für Montage- oder Reparaturzwecke. Beispielsweise genannt seien Vertriebspersonen oder auch Fachhandwerker, die von Kunden beauftragt werden, beim Kunden ihr Handwerk auszuüben, wie z.B. Monteure oder Wartungspersonal.

Regelmäßig werden die gewünschten oder benötigten Waren von einer solchen im Außendienst tätigen Person zunächst in einem Auslieferungslager, wie z.B. bei einem Großhändler oder in der eigenen Firma vor der Fahrt zum Kunden abgeholt. Diese Beschaffungstätigkeit nimmt in diesem Fall einen nicht unerheblichen Teil der zur Verfügung stehenden Arbeitszeit ein.

Es ist ebenso bekannt, benötigte oder gewünschte Waren direkt zum Kunden oder zu der im Außendienst tätigen Person durch Versanddienstleister zu überbringen, was aber voraussetzt, das die zuzustellende Ware auch praktisch in Empfang genommen werden kann, ansonsten müsste ein erneuter Zustellversuch unternommen werden, was personell aufwändig und kostenintensiv ist.

Durch die Anmelderin selbst ist ein Behälter zum Empfang und auch zum Versenden von Waren entwickelt worden, mit dem der Empfang von Waren an der Adresse der empfangenden Person praktisch jederzeit erfolgen kann, ohne das die empfangende oder versendende Person zu Hause sein muss. Hierfür wird an der Haustür temporär ein Behälter befestigt, in den ein Versanddienstleister eine z.B. bestellte Ware einlegen kann. Zwar hat hierdurch eine Person die Ware juristisch empfangen, weil sie in die Sphäre der Person zugestellt wurde, praktisch erfolgt der Empfang jedoch erst nach Rückkehr der Person nach Hause.

Bei im Außendienst tätigen Personen, die bestellte oder gewünschte Waren z.B. aus beruflichen Gründen benötigen, bedeutet dies, dass die Ware erst zum Ende der täglichen Arbeitszeit empfangen wird, wenn die Person nicht gemäß eingangs genannter Variante selbst die Waren abholt oder hierzu Dritte autorisiert.

Es ist daher eine Aufgabe der Erfindung ein Verfahren und ein System bereit zu stellen, mit dem faktisch jederzeit an jedem Ort ein Empfang von gewünschten oder benötigten Waren durch jegliche Person, z.B. beruflich im Außendienst tätige Personen möglich wird. Dabei soll bevorzugt auch eine hohe Sicherheit gegeben sein, um zu verhindern, dass Waren in unberechtigte Hände gelangen.

Hierfür ist es eine Aufgabe der Erfindung sicherzustellen, dass eine Entfernung der verriegelten Warenempfangsbox vom Haltegestell nur durch eine Person erfolgen kann, die auch befugt ist, die Warenempfangsbox zu öffnen.

Die Aufgabe wird verfahrensgemäß dadurch gelöst, dass am Fahrzeug ein Haltegestell zumindest temporär befestigt wird und an dem Haltegestell die Warenempfangsbox befestigt wird, wobei eine Befestigung der Warenempfangsbox erfolgt durch Herstellung einer Verbindung zwischen wenigstens einem ersten Befestigungsmittel des Haltegestells und wenigstens einem zweiten Befestigungsmittel der Warenempfangsbox, wobei eine Verriegelung zwischen erstem und zweitem Befestigungsmittel durch ein Schließen und eine Entriegelung zwischen erstem und zweitem Befestigungsmittel durch ein Öffnen eines Deckels der Warenempfangsbox erfolgt.

Die Aufgabe wird weiterhin gelöst durch ein System zum Empfang von Waren an einem Fahrzeug, insbesondere Kraftfahrzeug umfassend ein Haltegestell, welches an einem Fahrzeug, insbesondere Kraftfahrzeug, insbesondere dessen Kofferraumdeckel zumindest temporär befestigbar ist und eine Warenempfangsbox, die am Haltegestell zumindest temporär befestigbar ist und die einen durch autorisierte Personen zu öffnenden und zu schließenden Deckel aufweist, wobei das Haltegestell wenigstens ein erstes Befestigungsmittel und die Warenempfangsbox wenigstens ein zweites Befestigungsmittel umfasst und die ersten und zweiten Befestigungsmittel miteinander verbindbar sind, wobei am Deckel weiterhin wenigstens ein Riegelelement angeordnet ist, welches durch Schließen des Deckels in die Befestigungsmittel einführbar ist und diese hierdurch verriegelbar sind.

Eine solche Warenempfangsbox, insbesondere deren Deckelelement bzw. der Deckel selbst kann z.B. ein elektromechanisches Schloss aufweisen, das mit einem PIN-Code, z.B. über ein Tastenfeld, z.B. mit kapazitiver Touchfunktionalität oder mit einem elektronischen Schlüssel (z.B. RFID-Transponder oder durch Nah- oder Fernfeldkommunikation, wie Bluetooth oder GSM) oder auch mit biometrischen Merkmalen (z.B. Fingerabdruck) geöffnet werden kann.

Dieser Lösung liegt der wesentliche Gedanke zugrunde, das eine Vielzahl von Personen im Besitz eines Fahrzeugs, insbesondere Kraftfahrzeugs, beispielsweise eines Autos ist, sei es als Eigentümer oder lediglich als Nutzer eines zur Verfügung gestellten Fahrzeug, insbesondere Kraftfahrzeuges (z.B. Firmenwagen / Servicefahrzeug) und das regelmäßig sich ein solches Fahrzeug, insbesondere Kraftfahrzeug einer Person, die eine Ware benötigt, sich auch in der Nähe der Person befindet, unabhängig davon, ob sich die Person auf der Arbeit oder zu Hause oder an einem sonstigen Ort in der Freizeit befindet. Unter einen Fahrzeug werden hier auch nicht angetriebene Fahrzeuge verstanden, wie beispielsweise Anhänger.

Besonders beruflich tätige Außendienstmitarbeiter sind regelmäßig mit einem beruflich genutzten Fahrzeug, insbesondere Kraftfahrzeug unterwegs, um Kunden zu besuchen und dort ihrer Arbeit nachzugehen.

Es kann somit durch das erfindungsgemäße System und das Verfahren praktisch jederzeit, z.B. auch während der Abwesenheit am Fahrzeug, insbesondere Kraftfahrzeug, insbesondere auch außerhalb von Arbeitszeiten oder auch nachts am Ort des Fahrzeug, insbesondere Kraftfahrzeuges einer Person eine Ware an die Person zugestellt werden, welche die Person nach Rückkehr zum Fahrzeug, insbesondere Kraftfahrzeug vorfindet.

Außendienstpersonen können hierdurch z.B. Waren für einen zweiten Kunden zugestellt bekommen, während sie gerade bei einem ersten Kunden arbeiten. Oder eine Außendienstperson bekommt von einem Großhändler Waren über Nacht zugestellt, welche sodann morgens direkt mit zum Kunden genommen werden können, ohne dass die Person die Waren erst bei Großhändler selbst abholen muss.

Die Erfindung kann hier auch vorsehen, dass die Warenempfangsbox zusammen mit einer Ware an den Ort des Fahrzeug, insbesondere Kraftfahrzeuges geliefert wird, insbesondere bei Vorliegen einer Information, dass am Fahrzeug, insbesondere Kraftfahrzeug keine Warenempfangsbox am Haltegestell angeordnet ist. In diesem Fall kann die Warenempfangsbox inklusive darin eingelegter Ware von einer zustellenden Person an dem Haltegestell befestigt werden. Z.B. kann dies gegen Berechnung eines Pfandbetrages erfolgen, der bei Rückgabe der Warenempfangsbox an den Lieferdienst oder das Auslieferungslager erstattet wird.

Die Erfindung ist nicht auf das Beispiel einer im Außendienst tätigen Person beschränkt. Auch ist es nicht zwingend erforderlich, dass nur eine berechtigte Person, neben Zustellpersonen, Zugang zu einer Warenempfangsbox hat bzw. erhält.

Es besteht in einer Ausführung auch die Möglichkeit, eine Warenempfangsbox oder mehrere Warenempfangsboxen an einem Fahrzeug anzuordnen, die von mehreren Personen zum Empfang von Waren, ggfs. sogar zur Absendung von Waren verwendet werden kann / können. Es kann so eine mobile "Packstation" gebildet werden, an der unterschiedliche Personen / Kunden ihre Waren abholen können. Z.B. kann ein Anhänger hierfür mit mehreren Warenempfangsboxen oder zunächst auch nur mit mehreren Haltegestellen für Warenempfangsboxen ausgestattet werden.

Die Erfindung sieht vor, dass außen am Fahrzeug, insbesondere Kraftfahrzeug ein Haltegestell, zumindest temporär befestigt wird und an dem Haltegestell die Warenempfangsbox befestigt wird. Die Befestigung des Haltegestells am Fahrzeug kann dabei bevorzugt an einer Fahrzeugtür/-klappe, wie z.B. einer seitlichen oder hinteren Tür oder einem Kofferraumdeckel oder sonstigem, bevorzugt schwenkbar beweglichen Fahrzeugteil erfolgen.

Es können für z.B. einheitlich am Markt verwendete Warenempfangsboxen Haltegestelle bereit gestellt werden, die entweder hinsichtlich des verwendeten Fahrzeugs, insbesondere Kraftfahrzeugs individualisiert sind oder so variabel ausgebildet sind, dass ein Haltegestell praktisch an jeden Fahrzeug-, insbesondere Kraftfahrzeugtyp befestigt werden kann. Ein Haltegestell bildet somit einen Adapter, der am Fahrzeug, insbesondere Kraftfahrzeug verbleiben kann, wohingegen erfindungsgemäß eine Warenzustellbox temporär an dem Haltegestell befestigt werden kann, insbesondere bei Nichtbenutzung im Fahrzeug, insbesondere Kraftfahrzeug verbleibt.

Die Warenempfangsbox kann z.B. derart ausgebildet sein, dass sie ein unteres Bodenelement, insbesondere wannenförmiges Bodenelement und ein oberes öffenbares und schließbares Deckelelement umfasst, wobei sich zwischen Boden- und Deckelelement kollabierbare, insbesondere faltbare Seitenwände erstrecken.

Erfindungsgemäß ist es vorgesehen, dass das Haltegestell wenigstens ein erstes Befestigungsmittel und die Warenempfangsbox wenigstens ein zweites Befestigungsmittel umfasst und die ersten und zweiten Befestigungsmittel miteinander verbindbar sind, insbesondere durch Form- und/oder Kraftschluß, wobei am Deckel weiterhin wenigstens ein Riegelelement angeordnet ist, welches durch Schließen des Deckels in die Befestigungsmittel einführbar ist, insbesondere diese hierdurch verriegelt.

Durch eine solche Warenempfangsbox wird sichergestellt, dass diese im leeren Zustand wenig Platz in Anspruch nimmt und z.B. im Auto verstaut wird bis zur Benutzung oder aber bei Verbleib außen am Fahrzeug, insbesondere Kraftfahrzeug zur Verringerung der Windlast verkleinert wird.

Hierfür ist es vorteilhaft, wenn Deckelelement und Bodenelement aufeinander zu und voneinander weg bewegt werden können, um das innere Volumen der Warenempfangsbox zu verkleinern oder zu vergrößern und insbesondere wenn das Bodenelement als Wanne oder Schale ausgebildet ist, welche/s im komplett zusammengefalteten Zustand der Warenempfangsbox mit seinen seitlichen aufstehende Wänden vollständig das Deckelelement und die zwischen Bodenelement und Deckelelement befindlichen kollabierten Seitenwände umschließt, insbesondere also die obere Kante der Wanne über den Deckel übersteht.

Die Kollabierbarkeit der sich zwischen Bodenelement und Deckelelement erstreckenden Seitenwände kann z.B. durch einen textilen Schlauch gegeben sein, z.B. aus einem schnittfesten Gewebe, ggfs. Verbundgewebe, z.B. mit Kevlarfasern. Der textile Schlauch kann dabei im Wesentlichen einen rechteckigen Querschnitt aufweisen, welcher im Wesentlichen dem Querschnitt des Deckelelementes entspricht. Z.B. kann der textile Schlauch abgesteppte Falten aufweisen, um einen solchen rechteckigen Querschnitt auszubilden.

Auch mehrere starre gelenkig miteinander verbundene Seitenwandelemente können vorgesehen sein, um eine jeweilige Seitenwand kollabierbar bzw. zusammenfaltbar zu gestalten.

Insbesondere kann es auch vorgesehen sein, dass ein textiler Schlauch starre gelenkig verbundene Seitenwandelemente umgibt.

Um eine Wind- und Wasserdichtigkeit im Seitenwandbereich zu erzielen kann es vorgesehen sein, zur gelenkigen Verbindung von starren Seitenwandelementen Filmgelenke bzw. Filmscharniere einzusetzen.

Die Erfindung sieht vor, dass eine Befestigung der Warenempfangsbox erfolgt durch Herstellung einer Verbindung, insbesondere eines Form- und/oder Kraftschlusses zwischen wenigstens einem ersten Befestigungsmittel des Haltegestells und wenigstens einem zweiten Befestigungsmittel der Warenempfangsbox, wobei eine Verriegelung zwischen erstem und zweitem Befestigungsmittel durch ein Schließen und eine Entriegelung zwischen erstem und zweitem Befestigungsmittel durch ein Öffnen eines Deckels der Warenempfangsbox erfolgt.

Hierdurch wird sichergestellt, dass insbesondere eine Entfernung der verriegelten Warenempfangsbox vom Gestell nur durch eine Person erfolgen kann, die auch befugt ist die Warenempfangsbox zu öffnen.

Um einen Zugang zu der Warenempfangsbox zu erhalten, also insbesondere den Deckel des Deckelelementes zu öffnen kann es die Erfindung in einer Ausführung vorsehen, dass ein Sicherheitscode zum Öffnen der Warenempfangsbox festgelegt und durch Telekommunikation zumindest an eine Zustellperson übermittelt wird, der sich das Auslieferungslager bedient.

Z.B. kann die Person, an deren Fahrzeug die Warenempfangsbox angeordnet ist einen eigenen persönlichen, typischerweise immer gleichbleibenden, insbesondere jedoch auch selbst änderbaren PIN-Code besitzen, der zur Öffnung an einem Tastenfeld der Warenempfangsbox eingegeben wird. Diese Person kann somit jederzeit Zugang zum Inhalt der Warenempfangsbox erhalten.

Die eine Ware zustellende Person hingegen hat in einer möglichen Ausführung keinen eigenen gleichbleibenden PIN-Code, sondern erhält einen zur Öffnung zu verwendenden PIN-Code mitgeteilt, z.B. durch Telekommunikation an ein Telekommunikationsgerät der Zustellperson. Erst durch den telekommunizierten PIN-Code kann eine Zustellperson somit die Ware in die Warenempfangsbox einlegen. Z.B. kann dieser PIN-Code der von der Zustellperson zu verwenden ist bei der Bestellung einer Ware generiert werden und kann der Ware zugeordnet werden, z.B. einer Sendungsverfolgungsnummer der Ware, die z.B. auf der Ware selbst angeordnet wird, z.B. durch einen maschinenlesbaren Barcode.

Es kann vorgesehen sein, dass eine Zustellperson zur Zustellung der Ware die Sendungsverfolgungsnummer einscannt mit einem mobilen Lesegerät, welches anhand der Sendungsverfolgungsnummer die zugeordnete PIN-Code-Nummer an den Zusteller anzeigt. Dafür kann der PIN-Code aus einer Datenbank durch Telekommunikation abgefragt werden oder er liegt bereits als Datensatz in dem Lesegerät vor, z.B. weil diese PIN-Code-Daten zuvor schon, insbesondere aus einer Datenbank in das Lesegerät geladen wurden.

Allgemein kann es vorgesehen sein, dass die Warenempfangsbox an einem zentralen Server (Backbone), der in einem Telekommunikationsnetzwerk eingebunden ist, registriert ist, hierbei bevorzugt mit dem Server durch eine Telekommunikationseinheit in der Warenempfangsbox diese auch mit dem Server in einer Kommunikationsverbindung steht, bzw. eine solche zumindest wahlweise herstellbar ist, z.B. über Mobilfunk, insbesondere GSM, 3G, LTE. Eine die Warenempfangsbox nutzende Person und/oder auch ein Dienstleister, der solche Warenempfangsboxen bereitstellt kann/können in bevorzugter Ausführung Nutzerdaten und Einstellungen/Parameter z.B. über eine Datenbank des Servers verwalten, wie z.B. Sicherheitscodes für den Zugang.

Der Sicherheitscode zum Öffnen der Warenempfangsbox kann z.B. von einem, insbesondere dem vorgenannten zentralen Server generiert werden, an dem die Warenempfangsbox registriert ist, insbesondere hiernach an die Warenempfangsbox und ein Kommunikationsgerät der Zustellperson telekommuniziert werden, er kann aber auch von einer Sicherheitsvorrichtung der Warenempfangsbox selbst generiert und von einer Kommunikationseinheit der Warenempfangsbox an eine Kommunikationseinheit einer Zustellperson übertragen werden. Diese Kommunikation kann zwischen Warenempfangsbox und Zustellperson direkt erfolgen, z.B. über Mobilfunk (GSM) oder Nahfeldkommunikation (z.B. Bluetooth), aber auch über zwischengeschaltete Server / Datenbanken erfolgen, dann typischerweise durch Telekommunikation über Mobilfunk (z.B. GSM) oder über bidirektionale Satellitenkommunikation.

Durch vorgenannte Ausführung kann sichergestellt werden, dass die Person, an deren Fahrzeug die Warenempfangsbox angeordnet ist, immer Zugriff auf die Box hat, hingegen Zustellpersonen jeweils nur im Einzelfall.

Hier kann es auch bevorzugt vorgesehen sein, dass ein PIN-Code einer Zustellperson nur einmal verwendet werden kann zum Öffnen des Deckels. Nach Einlegen der Ware in die Box und Schließen des Deckels ist der Deckel mit dem verwendeten PIN-Code nicht nochmals zu öffnen.

Die Erfindung kann aber auch vorsehen, insbesondere wenn mehrere Personen, abgesehen von den Zustellpersonen, Zugang zu einer Warenempfangsbox erhalten sollen, dass auch diese Personen jeweils benötigte Sicherheitscodes, z.B. PIN-Nummern durch Telekommunikation an ein bevorzugt mobiles Kommunikationsgerät übermittelt bekommen, insbesondere vom zentralen Server oder der Box selbst. Generierung und Übersendung kann hier auf dieselbe zuvor beschriebene Weise erfolgen, mit dem einzigen Unterschied, dass die Übermittlung eines Codes dann an die nutzende Person und nicht an die Zustellperson erfolgt.

Bei gleichzeitiger Generierung von Sicherheitscodes für die nutzende Person und eine Zustellperson kann die Erfindung vorsehen, dass bezogen auf eine zuzustellende Ware für diese beiden Personen unterschiedliche Codes verwendet werden, insbesondere wie zuvor beschrieben kommuniziert werden.

Bei dem erfindungsgemäßen System kann es vorgesehen sein, dass das wenigstens eine erste Befestigungsmittel, als ein um eine Drehachse verschwenkbarer Arm des Haltegestells ausgebildet ist, der in ein zweites Befestigungsmittel an der Warenempfangsbox einschiebbar ist. Bevorzugt sind zwei erste Befestigungsmittel am Haltegestell angeordnet.

Das wenigstens eine zweite Befestigungsmittel kann bevorzugt am oder im Rahmen des Deckelelementes angeordnet ist, welcher die durch den Deckel verschließbare Öffnung umgibt. Insbesondere können wenigstens zwei zweite Befestigungsmittel an gegenüberliegenden Seiten des Rahmens angeordnet sein, bevorzugt die in der Position korrespondieren mit den vorgenannten zwei verschwenkbaren Armen am Haltegestell, nachdem diese in eine von Gestell weggeschwenkte, bzw. davon vorstehende Lage gebracht sind. Es lässt sich so das Deckelelement der Warenempfangsbox auf die Arme des Haltegestells aufschieben, die hierdurch in die am Rahmen angeordneten Hohlprofile eindringen.

Erfindungsgemäß wird die Warenempfangsbox am Haltegestell dadurch verriegelt, dass beim Schließen des Deckels wenigstens ein, bevorzugt zwei daran angeordnete Riegelelemente in die verbundenen ersten und zweiten Befestigungsmittel eingreift, wodurch diese nicht mehr auseinander gezogen werden können. Nach Schließen des Deckels kann somit die Warenempfangsbox nicht mehr vom Haltegestell entfernt werden.

Um eine universelle Verwendbarkeit des Haltegestells und auch eine problemlose Abnehmbarkeit zu erreichen kann es bevorzugt vorgesehen sein, dass dieses ein Basiselement, insbesondere einen Basisrahmen umfasst von welchem wenigstens drei, bevorzugt 4 Stützen, insbesondere längenverstellbare Stützen vorspringen. Die zueinander parallelen Stützen weisen an ihren freien Enden Anlageelemente, z.B. Saugnäpfe auf, mit denen die Stützen an der Karosserie eines Fahrzeug, insbesondere Kraftfahrzeuges anlegbar sind. An dem Basiselement, insbesondere nahe der Verbindungsstellen der Stützen mit dem Basiselement, sind bevorzugt Spannelemente, insbesondere Spanngurte angeordnet, deren freie Enden Verbindungselemente zur Befestigung am Fahrzeug, insbesondere Kraftfahrzeug aufweisen.

Diese Verbindungselemente können als Haken ausgebildet sein zum jeweiligen Umgreifen einer Kante am Fahrzeug, insbesondere Kraftfahrzeug, insbesondere einer Kante des Kofferraumdeckels.

Das Basiselement, insbesondere der Basisrahmen kann durch Längenanpassung der Stützen in einer vertikalen Ebene angeordnet werden. In dieser Ebene sind sodann bevorzugt zumindest die Bauteile des Basiselementes angeordnet, also die Rahmenteile bei einer rahmenförmigen Ausbildung des Basiselementes.

Die verschwenkbaren Arme des Haltegestells, können bei Anordnung des Basiselementes in einer vertikalen Ebene eine vertikale Drehachse aufweisen, insbesondere hierdurch aus einer am Basiselement anliegenden Position in eine vom Basiselement abstehende Position verschwenkbar sein.

Das Deckelelement der Warenempfangsbox kann zusätzlich zur Sicherung des Deckels mit dem eingangs genannten elektromechanischen Schloß wenigstens ein von außen manuell betätigbares rein mechanisches Verschlußelement aufweisen mit dem der Deckel am Rahmen befestigbar ist. Dies kann z.B. als Transposrtsicherung vorgesehen sein, aber auch um den Deckel dicht auf eine Oberkante des Rahmens des Deckelelementes zu ziehen und so eine Wasserdichtigkeit zu erzielen.

Die Erfindung kann in einer Ausführung vorsehen, dass die Warenempfangsbox alleinig mit dem Deckelelement hängend am Haltegestellt angeordnet wird. Das Bodenelement der Warenempfangsbox hängt sodann frei unter dem Deckelelement.

Eine demgegenüber bevorzugte, weil stabilere Befestigung sieht vor, dass auch das Bodenelement mit dem Haltegestellt verbunden wird. Dafür kann das Bodenelement, insbesondere das wannenförmige Bodenelement an der Warenempfangsbox wenigstens ein drittes Befestigungsmittel aufweisen, das formschlüssig zumindest bereichsweise um das Basiselement, insbesondere in dessen unterem Bereich herumlegbar ist und mit dem Basiselement lösbar verbindbar ist, insbesondere durch eine Stift- oder Splintverbindung mittels wenigstens eines Stifts / Splintes, der jeweils durch fluchtende Ausnehmungen im dritten Befestigungselement und dem Basiselement hindurchführbar ist.

Ein solches drittes Befestigungsmittel ist bevorzugt an der zum Haltegestell weisenden Seite des Bodenelementes angeordnet.

Weiterhin kann es vorgesehen sein, dass am Haltegestell, insbesondere an dessen Basiselement und/oder am Bodenelement der Warenempfangsbox ein Nummernschildträger angeordnet ist. Hierdurch wird sichergestellt, dass ein Fahrzeug, insbesondere Kraftfahrzeug zulässigerweise im Straßenverkehr bewegt werden kann, selbst wenn das Haltegestell ggfs. inkl. Warenempfangsbox am Fahrzeug, insbesondere Kraftfahrzeug montiert ist. Alternativ oder ergänzend kann es auch vorgesehen sein, ein Schild oder Schildträger zur Darstellung einer sonstigen Bezeichnung, z.B. eines Namens, am Basiselement und/oder Bodenelement anzuordnen.

Ergänzend kann an der Warenempfangsbox, insbesondere an dessen Bodenelement und/oder am Haltegestell ein Ankerelement, insbesondere mit einem flexiblem Band angeordnet sein, welches in einen Spaltbereich zwischen einer Tür oder einem Kofferraumdeckel und der Karosserie einlegbar ist. Selbst wenn die Warenempfangsbox vom Haltegestell entfernt würde oder das Haltegestellt vom Fahrzeug, insbesondere Kraftfahrzeug entfernt würde, bestände weiterhin eine Verbindung über das Ankerelement zum Fahrzeug, insbesondere Kraftfahrzeug.

Um die Diebstahlsicherheit zu erhöhen kann es vorgesehen sein, dass ein Verbindungselement zwischen Ankerelement und Warenempfangsbox oder Haltegestell gegen Durchtrennung sicher ist. Bei einer flexiblen, textilen Ausbildung des Verbindungselementes, z.B. als Gurt können metallische Fasern / Stränge im Verbindungselement vorliegen.

Eine Ausführungsform des Systems und dessen verfahrensmäßiger Einsatz wird anhand der nachfolgenden Figuren erläutert.

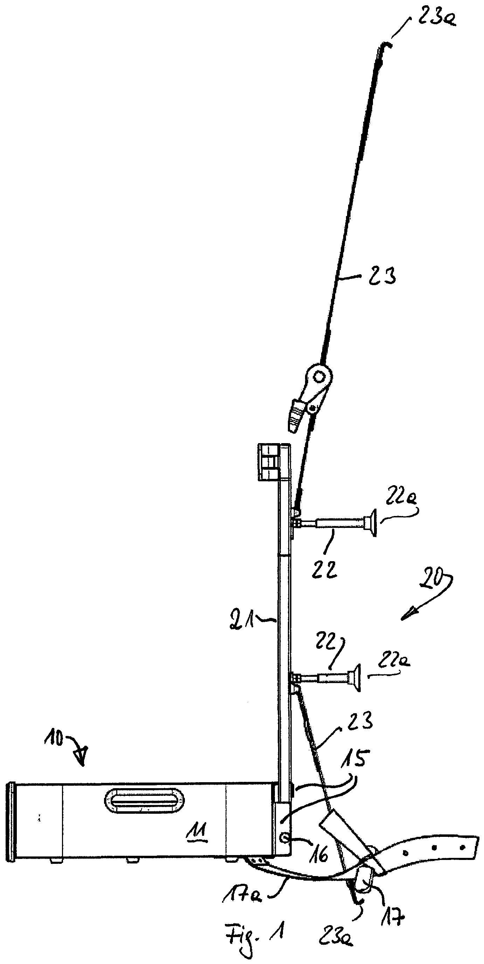

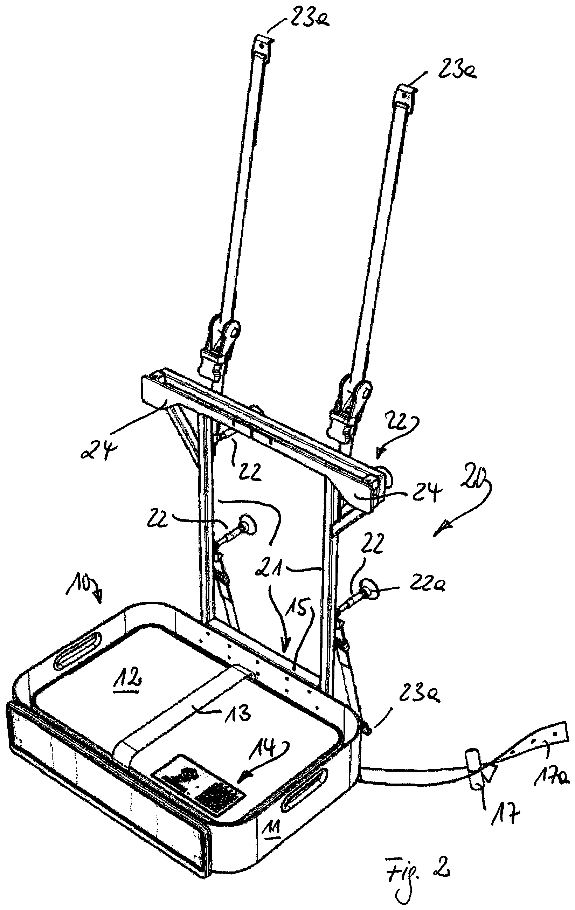

Die Figuren 1 und 2 zeigen in Seitenansicht und perspektivischer Ansicht ein erfindungsgemäßes System aus einer Warenempfangsbox 10 und einem Haltegestell 20.

Die Warenempfangsbox ist in den Figuren 1 und 20 im kollabierten / zusammengefalteten Zustand gezeigt und umfasst ein wannenförmiges Bodenelement 11, das Bodenelement umgibt das Deckelelement 12, welches eine sich darüber erstreckenden Griff 13 aufweist. Im Deckel des Deckelelementes 12 ist weiterhin ein Tastenfeld 14 angeordnet um PIN-Codes einzugeben. Auch eine nicht gezeigte Kommunikationseinheit für Nah- und/oder Fernfeldkommunikation kann im Deckelelement integriert sein.

An der zum Gestell 20 weisenden Rückseite des Bodenelementes 11 weist diese im Sinne der vorherigen Beschreibung dritte Befestigungselemente 15 durch L- oder u-förmige Profile und Laschen auf, mit denen das Bodenelement, bevorzugt formschlüssig am Haltegestell 20 eingehängt werden kann, insbesondere an Streben des rahmenförmigen Basiselementes 21 des Haltegestells 20. Um eine sichere Verbindung herzustellen kann ein Stift 16 ein drittes Befestigungselement und eine Strebe des Baiselementes 21 durchdringen, z.B. unter Federvorspannung.

Am Bodenelement 11 ist ein Ankerelement 17 über einen textilen Gurt 17a angeordnet. Ankerelement und Gurt können so in einen Türspalt eines Fahrzeugs, insbesondere Kraftfahrzeugs eingelegt werden, dass das Ankerelement 17 im Fahrzeug angeordnet ist.

Vom Basiselement 21 des Haltegestells 20 springen in Richtung zu einem hier nicht gezeigten Fahrzeug, insbesondere Kraftfahrzeug Stützen 22 vor, die in der Länge verstellbar sind. Z.B. sind die Stützen als Hülsen mit Innengewinde ausgebildet, die auf Gewindestangen getragen sind. Vier Stützen sind hier vorgesehen, die in den Ecken eines gedachten Rechteckes angeordnet sind.

Die freien Enden der Stützen 22 weisen Anlageelement 22a auf, z.B. als Saugnäpfe.

Am Haltegestell, insbesondere am Basiselement 21 ist jeweils nahe der Verbindungsstelle zwischen Basiselement 21 und einer Stütze 22 ein Spanngurt 23 angeordnet. Die Spanngurte sind längenverstellbar, die hier oben dargestellten durch eine Ratsche. Am jeweiligen freien Ende eines Spanngurtes 23 ist ein Haken 23a angeordnet mit dem ein Spanngurt an einer Kante einer Tür, insbesondere des Kofferraumdeckels befestigbar ist. Durch Spannen der Gurte wird das Gestell mit den Stützen an der gewählten Tür oder Kofferraumklappe befestigt.

Besonders die Figur 2 zeigt oben am Basiselement zwei daran verschwenkbar angeordnete Arme 24, hier in einer Position in der die Arme nahe zum Gestell bzw. dem Basiselement 21 geschwenkt sind.

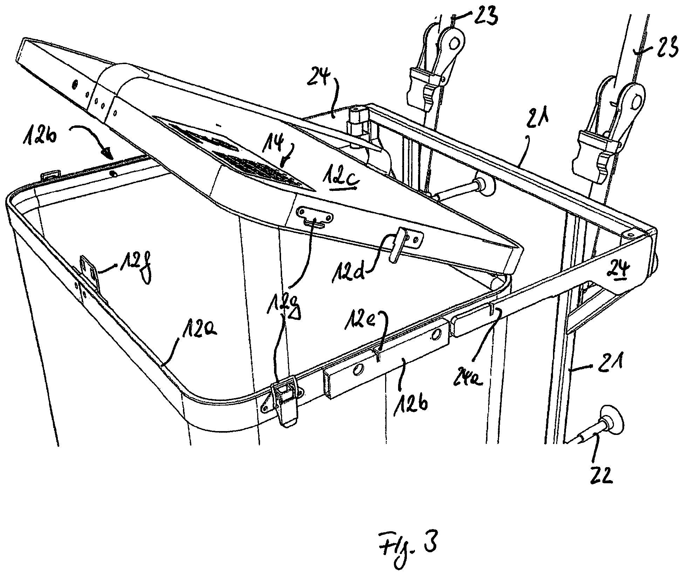

Die Figur 3 zeigt diese Arme 24 in der ausgeschwenkten Position. Die Arme 23 bilden im Sinne der vorherigen allgemeinen Beschreibung die ersten Befestigungsmittel.

Am unteren Rahmen 12a des Deckelelementes 12 sind an den Seiten, die parallel zu den ausgeschwenkten Armen 24 verlaufen, hier die kurzen Seiten, einander gegenüberliegend Hohlprofile 12b angeordnet, welche die zweiten Befestigungsmittel bilden. Diese sind z.B. durch Niete befestigt. In diese Hohlprofile können die Arme 24 eingeschoben werden, so dass das Deckelelement 12 insgesamt von den Armen 24 getragen wird.

Hier ist erkennbar, dass am Deckel 12c des Deckelementes 12 seitlich und über dem jeweiligen Hohlprofil 12b ein Riegelelement 12d befestigt ist mit nach unten vorspringender Lasche. Im abgesenkten Zustand des Deckels 12c dringt diese Lasche durch eine Ausnehmung 12e oben auf einem Hohlprofil 12b in das Hohlprofil 12b ein. Sofern ein Arm 24 in das Hohlprofil 12b eingesteckt ist dringt die Lasche ebenso in eine Ausnehmung / eine Schlitzung 24a am Endbereich eines Armes ein, so dass Hohlprofil 12b und Arm 24 aneinander verriegelt sind.

Nur bei geöffnetem Deckel 12c kann daher die Warenempfangsbox von den Armen des Haltegestells abgezogen werden.

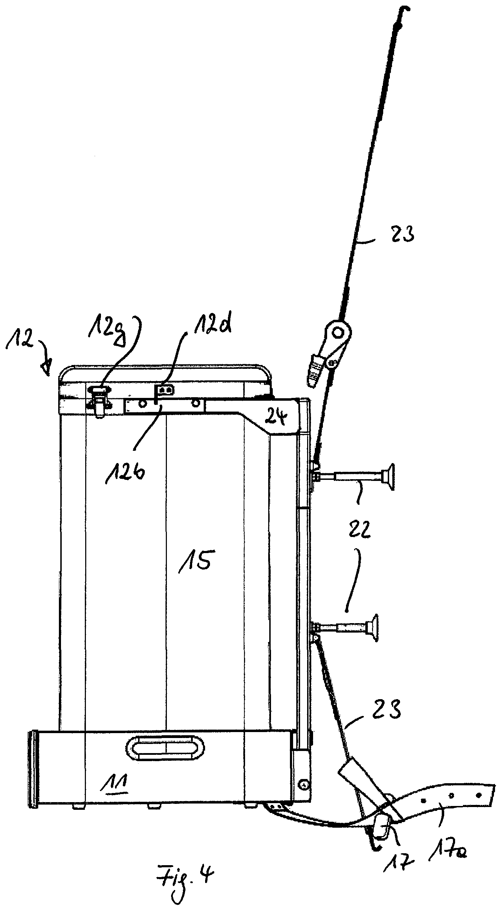

Die Figur 4 zeigt in einer Seitenansicht die entfaltete Warenempfangsbox mit den Seitenwänden 15, die sich zwischen Deckelelement 12 und Bodenelement 11 erstrecken. Die Seitenwände sind hier bevorzugt aus einem schnittfesten Textil gebildet, z.B. mit Kevlar-Anteilen und/oder Metallanteilen.

Zusätzlich zu dem elektromechanischen Verriegelungsmechanismus, von dem hier nur am Rahmen 12a eine Riegellasche 12f gezeigt ist weist das Deckelelement rein mechanische manuell betätigbare Verschlußelemente 12g auf, die den Rahmen 12a und den Deckel 12c miteinander verbinden, z.B. als Transportsicherung.

Das erfindungsgemäße Verfahren sieht in einer beispielhaften Anwendung vor, dass z.B. eine im Außendienst tätige Person das Haltegestell permanent am beruflich genutzten Fahrzeug, insbesondere Kraftfahrzeug befestigt hat.

Sofern ein Bedarf an einer z.B. beruflich benötigten Ware erkennbar ist, gibt die Person eine Bestellung der benötigten Ware direkt oder mittelbar bei einem Auslieferungslager auf, z.B. dem des Arbeitgebers oder auch eines Großhändlers. Dies kann z.B. über eine Applikation auf einem Mobiltelefon oder durch einen Personalcomputer erfolgen.

Es kann allgemein - unabhängig von dieser Beispielsbeschreibung und somit bei allen Ausführungsvarianten - vorgesehen sein, dass eine Information über den Parkort des Fahrzeug, insbesondere Kraftfahrzeuges, insbesondere ständig oder regelmäßig oder zumindest bei der Bestellung an das Auslieferungslager übermittelt wird, insbesondere an einen von diesem betriebenen Server oder an einen Server, der eine zentrale Datenbank hostet, in der von jedem Berechtigten der Standort / Parkort der Warenempfangsbox zum Zweck der Auslieferung von Waren ausgelesen werden kann. Eine solche Ortsinformation kann z.B. einer dort registrierten Warenempfangsbox zugeordnet sein.

Die Ortinformation kann erzeugt werden von einer satellitengestützten Lokalisierungsvorrichtung (z.B. GPS-Empfänger) in der Warenempfangsbox oder im Fahrzeug, insbesondere Kraftfahrzeug an welchem die Box angeordnet ist. Alternativ kann sie von einem mobilen Kommunikationsgerät der Person am Ort des Fahrzeuges generiert und zur Verfügung gestellt werden, z.B. bei einer Bestellung oder in einer Applikation auf dem Kommunikationsgerät in der das erfindungsgemäße Verfahren organisiert ist.

Spätestens nach einer aufgegebenen Bestellung hängt die im Außendienst tätige Person die Warenempfangsbox in das Haltegestell und verriegelt diese dort durch Schließen des Deckels nach dem Einhängen.

Noch während der Arbeitszeit, z.B. unmittelbar nach der Bestellung oder auch nach der Arbeitszeit, z.B. nachts nimmt das Auslieferungslager durch eine Zustellperson eine Zustellung der Ware an die im Standort bekannte Warenempfangsbox vor.

Bei der Bestellung wurde weiterhin ein Sicherheitscode, z.B. eine PIN-Nr. generiert, z.B. von einer Sicherheitsvorrichtung der Warenempfangsbox, insbesondere deren Elektronik in dem Bestellvorgang durch Kommunikation eingebunden wird oder von einem zentralen Server, an dem die Box registriert und der kommunikativ in den Bestellvorgang eingebunden ist. Es kann sich um den Server handeln, der auch die vorgenannte Datenbank hostet.

Die beauftragte und vom Auslieferungslager mit der bestellten Ware losgeschickte Zustellperson erhält den Zugangscode ausgehändigt, z.B. durch einen Aufdruck auf der Ware oder durch Kommunikation an ein mitgeführtes Kommunikationsgerät, z.B. mit dem bei Auslieferung eine Sendungsverfolgungsnummer von der Ware eingescannt wird. Durch den zur Kenntnis gebrachten Zugangscode kann die Zustellperson die Warenempfangsbox öffnen, die Ware einlegen und den Deckel wieder schließen, wodurch der Zugangscode verbraucht sein kann.

Die im Außendienst tätige Person findet beim Aufsuchen des Fahrzeug, insbesondere Kraftfahrzeuges die zugestellt Ware in der Box vor und kann diese sofort zum Einsatz bringen. Persönliche Besorgungsfahrten zu einem Auslieferungslager entfallen auf diese Weise.

Die Erfindung kann vorsehen, dass die Warenempfangsbox selbst eine Nachricht über das erfolgreiche Zustellen der Ware an die bestellende Person übermittelt. Dies kann insbesondere dann vorteilhaft sein, wenn eine Zustellung noch während der Arbeitszeit erfolgt, so dass die Person in Kenntnis gesetzt wird, dass die Ware aus der Box geholt werden kann.

## Patentansprüche

1. Verfahren zum Empfang von Waren aus einem Auslieferungslager oder von einem sonstigen Warenversender, bei dem außen an der Karosserie eines von der Person genutzten Fahrzeugs eine Warenempfangsbox (10) zumindest temporär angeordnet wird und eine von der Person benötigte/gewünschte Ware aus dem Auslieferungslager oder von dem sonstigen Warenversender an den Ort des geparkten Fahrzeugs transportiert und in die Warenempfangsbox (10) eingelegt wird, am Fahrzeug ein Haltegestell (20) zumindest temporär befestigt wird und an dem Haltegestell (20) die Warenempfangsbox (10) befestigt
wird, **dadurch gekennzeichnet, dass** eine Befestigung der Warenempfangsbox (10) erfolgt durch Herstellung einer Verbindung zwischen wenigstens einem ersten Befestigungsmittel (24) des Haltegestells (20) und wenigstens einem zweiten Befestigungsmittel (12b) der Warenempfangsbox (20), wobei eine Verriegelung zwischen erstem und zweitem Befestigungsmittel (24, 12b) durch ein Schließen und eine Entriegelung zwischen erstem und zweitem Befestigungsmittel (24, 12b) durch ein Öffnen eines Deckels (12c) der Warenempfangsbox (10) erfolgt.

2. Verfahren nach Anspruch 1, **dadurch gekennzeichnet, dass** das Einlegen der Ware während der Abwesenheit der Person, insbesondere außerhalb der Arbeitszeit einer Außendienstperson erfolgt.

3. Verfahren nach einem der vorherigen Ansprüche, **dadurch gekennzeichnet, dass** die Warenempfangsbox (10) zusammen mit einer Ware an den Ort des Fahrzeugs, insbesondere Kraftfahrzeuges geliefert wird, insbesondere bei Vorliegen einer Information dass am Fahrzeugs, insbesondere Kraftfahrzeug keine Warenempfangsbox (10) am Haltegestell (20) angeordnet ist.

4. Verfahren nach einem der vorherigen Ansprüche, **dadurch gekennzeichnet, dass** ein Sicherheitscode zum Öffnen der Warenempfangsbox (10) festgelegt und insbesondere durch Telekommunikation zumindest an eine Zustellperson übermittelt wird, der sich das Auslieferungslager bedient, insbesondere wobei der Sicherheitscode von einer Sicherheitsvorrichtung der Warenempfangsbox (10) oder einem zentralen Server generiert und von einer Kommunikationseinheit der Warenempfangsbox (10) oder dem zentralen Server an eine Kommunikationseinheit einer Zustellperson übertragen wird.

5. System zum Empfang von Waren an einem Fahrzeug umfassend ein Haltegestell (20), welches an einem Fahrzeug zumindest temporär befestigbar ist und eine Warenempfangsbox (10), die am Haltegestell (20) zumindest temporär befestigbar ist und die einen durch autorisierte Personen zu öffnenden und zu schließenden Deckel (12b) aufweist, **dadurch gekennzeichnet, dass** das Haltegestell (20) wenigstens ein erstes Befestigungsmittel (24) und die Warenempfangsbox (10) wenigstens ein zweites Befestigungsmittel (12b) umfasst und die ersten und zweiten Befestigungsmittel (24, 12b) miteinander verbindbar sind, wobei am Deckel (12c) weiterhin wenigstens ein Riegelelement (12d) angeordnet ist, welches durch Schließen des Deckels (12c) in die Befestigungsmittel (24, 12b) einführbar ist und diese hierdurch verriegelbar sind.

6. System nach Anspruch 5, **dadurch gekennzeichnet, dass** die Warenempfangsbox (10) ein unteres Bodenelement (11), insbesondere wannenförmiges Bodenelement (11) und ein oberes öffenbares und schließbares Deckelelement (12) umfasst, wobei sich zwischen Boden- und Deckelelement kollabierbare, insbesondere faltbare Seitenwände (15) erstrecken.

7. System nach Anspruch 5 oder 6, **dadurch gekennzeichnet, dass** das zweite Befestigungsmittel (12b) am oder im Rahmen des Deckelelementes (12) angeordnet ist, welcher die durch den Deckel (12c) verschließbare Öffnung umgibt, insbesondere wenigstens zwei zweite Befestigungsmittel (12b) an gegenüberliegenden Seiten des Rahmens angeordnet sind.

8. System nach Anspruch 7, **dadurch gekennzeichnet, dass** das wenigstens eine zweite Befestigungsmittel (12b) durch ein Hohlprofil (12b) ausgebildet ist, in welches ein erstes Befestigungsmittel (24) des Haltegestells (20) einschiebbar ist.

9. System nach einem der vorherigen Ansprüche 6 bis 8, **dadurch gekennzeichnet, dass** das wenigstens eine erste Befestigungsmittel (24), als ein um eine Drehachse verschwenkbarer Arm (24) des Haltegestells (20) ausgebildet ist, der in ein zweites Befestigungsmittel (12b), insbesondere Hohlprofil (12b) einschiebbar ist.

10. System nach einem der vorherigen Ansprüche 6 bis 9, **dadurch gekennzeichnet, dass** das Haltegestell (20) ein Basiselement (21), insbesondere einen Basisrahmen (21) umfasst von welchem wenigstens drei, bevorzugt 4, Stützen (22), insbesondere längenverstellbare Stützen (22) vorspringen und an dem Basiselement (21), insbesondere nahe der Verbindungsstellen der Stützen (22) mit dem Basiselement (21), Spannelemente (23), insbesondere Spanngurte (23) angeordnet sind, deren freie Enden Verbindungselemente (23a) zur Befestigung am Fahrzeug, insbesondere Kraftfahrzeug aufweisen.

11. System nach Anspruch 10, **dadurch gekennzeichnet, dass** die Verbindungselemente (23a) als Haken (23a) ausgebildet sind zum jeweiligen Umgreifen einer Kante am Fahrzeug, insbesondere Kraftfahrzeug, insbesondere einer Kante des Kofferraumdeckels oder einer Tür.

12. System nach einem der vorherigen Ansprüche 9 oder 11, **dadurch gekennzeichnet, dass** die verschwenkbaren Arme (24) des Haltegestells, bei Anordnung des Basiselementes (21) in einer vertikalen Ebene eine vertikale Drehachse aufweisen, insbesondere aus einer am Basiselement (21) anliegenden Position in eine vom Basiselement (21) abstehende Position verschwenkbar sind.

13. System nach einem der vorherigen Ansprüche 6 bis 12, **dadurch gekennzeichnet, dass** das Deckelelement (12) der Warenempfangsbox (10) zusätzlich zur Sicherung des Deckels (12c) mit einem elektromechanischen Schloß wenigstens ein manuell betätigbares rein mechanisches Verschlußelement (12g) aufweist, mit dem der Deckel (12c) am Rahmen befestigbar ist.

14. System nach einem der vorherigen Ansprüche 6 bis 13, **dadurch gekennzeichnet, dass** das Bodenelement (11), insbesondere wannenförmige Bodenelement (11) an der Warenempfangsbox (10) wenigstens ein drittes Befestigungsmittel (15) aufweist, das formschlüssig zumindest bereichsweise um das Basiselement (21), insbesondere in dessen unterem Bereich herumlegbar ist und mit dem Basiselement (21) lösbar verbindbar ist, insbesondere durch eine Stift- oder Splintverbindung mittels wenigstens eines Stifts / Splintes (16), der jeweils durch fluchtende Ausnehmungen im dritten Befestigungselement (15) und dem Basiselement (21) hindurchführbar ist.

15. System nach einem der vorherigen Ansprüche 6 bis 14, **dadurch gekennzeichnet, dass** am Haltegestell (20), insbesondere dessen Basiselement (21) und/oder am Bodenelement (11) der Warenempfangsbox (10) ein Nummernschildträger angeordnet ist.

16. System nach einem der vorherigen Ansprüche 6 bis 15, **dadurch gekennzeichnet, dass** an der Warenempfangsbox (10), insbesondere an dessen Bodenelement (11) ein Ankerelement (17), insbesondere mit einem flexiblem Band (17a) angeordnet ist, welches in einen Spaltbereich zwischen einer Tür oder einem Kofferraumdeckel und der Karosserie einlegbar ist.

## Claims

1. Method for receiving goods from a distribution warehouse, or from some other consignor, in the case of which a goods-receipt box (10) is arranged, at least temporarily, on the outside of the body of a vehicle used by the person and an item required/desired by the person is transported from the distribution warehouse, or from the other consignor, to the location of the parked vehicle and is introduced into the goods-receipt box (10), retaining framework (20) is fastened, at least temporarily, on the vehicle and the goods-receipt box (10) is fastened on the retaining framework (20), **characterized in that** the goods-receipt box (10) is fastened by a connection being established between at least one first fastening means (24) of the retaining framework (20) and at least one second fastening means (12b) of the goods-receipt box (20), wherein the first and second fastening means (24, 12b) are locked by virtue of a lid (12c) of the goods-receipt box (10) being closed, and the first and second fastening means (24, 12b) are unlocked by virtue of said lid being opened.

2. Method according to Claim 1, **characterized in that** the item is introduced while the person is absent, in particular outside the working hours of a person working in the field.

3. Method according to either of the preceding claims, **characterized in that** the goods-receipt box (10) is supplied, together with an item, to the location of the vehicle, in particular motor vehicle, in particular in the presence of information that there is no goods-receipt box (10) arranged on the retaining frame work (20) on the vehicle, in particular motor vehicle.

4. Method according to one of the preceding claims, **characterized in that** a security code for opening the goods-receipt box (10) is defined and communicated, in particular by telecommunications, at least to a delivery person employed by the distribution warehouse, in particular wherein the security code is generated by a security device of the goods-receipt box (10), or by a central server, and is transmitted from a communications unit of the goods-receipt box (10), or from the central server, to a communications unit of a delivery person.

5. System for receiving goods at a vehicle, comprising a retaining framework (20), which can be fastened, at least temporarily, on a vehicle, and a goods-receipt box (10), which can be fastened, at least temporarily, on the retaining framework (20) and has a lid (12b) which can be opened and closed by authorized persons, **characterized in that** the retaining framework (20) comprises at least one first fastening means (24), and the goods-receipt box (10) comprises at least one second fastening means (12b), and the first and second fastening means (24, 12b) can be connected to one another, wherein at least one locking element (12d) is also arranged on the lid (12c) and, by virtue of the lid (12c) being closed, can be inserted into the fastening means (24, 12b), it being possible for the latter to be locked as a result.

6. System according to Claim 5, **characterized in that** the goods-receipt box (10) comprises a lower, floor element (11), in particular a tray-like floor element (11), and an upper, lid element (12), which can be opened and closed, wherein collapsible, in particular foldable, side walls (15) extend between the floor element and lid element.

7. System according to Claim 5 or 6, **characterized in that** the second fastening means (12b) is arranged on or in the frame of the lid element (12), said frame surrounding the opening which can be closed by the lid (12c), in particular at least two second fastening means (12b) are arranged on opposite sides of the frame.

8. System according to Claim 7, **characterized in that** the at least one second fastening means (12b) is formed by a hollow profile (12b), into which a first fastening means (24) of the retaining frame (20) can be pushed.

9. System according to one of preceding Claims 6 to 8, **characterized in that** the at least one first fastening means (24) is designed in the form of an arm (24) of the retaining framework (20), it being possible for said arm to be pivoted about an axis of rotation and to be pushed into a second fastening means (12b), in particular hollow profile (12b).

10. System according to one of preceding Claims 6 to 9, **characterized in that** the retaining framework (20) comprises a basic element (21), in particular a basic frame (21), from which at least three, preferably four, supports (22), in particular length-adjustable supports (22), project, and tensioning elements (23), in particular tensioning straps (23), are arranged on the basic element (21), in particular in the vicinity of the points at which the supports (22) are connected to the basic element (21), the free ends of said tensioning elements having connecting elements (23a) for fastening on the vehicle, in particular motor vehicle.

11. System according to Claim 10, **characterized in that** the connecting elements (23a) are designed in the form of hooks (23a) for respectively engaging around an edge of the vehicle, in particular motor vehicle, in particular an edge of the luggage-compartment lid or of a door.

12. System according to either of preceding Claims 9 and 11, **characterized in that**, when the basic element (21) is arranged in a vertical plane, the pivotable arms (24) of the retaining framework have a vertical axis of rotation, in particular they can be pivoted out of a position in which they butt against the basic element (21) into a position in which they project from the basic element (21).

13. System according to one of preceding Claims 6 to 12, **characterized in that**, in addition to the lid (12c) being secured by an electromechanical lock, the lid element (12) of the goods-receipt box (10) has at least one manually actuable, purely mechanical closure element (12g), by means of which the lid (12c) can be fastened on the frame.

14. System according to one of preceding Claims 6 to 13, **characterized in that** the floor element (11), in particular the tray-like floor element (11), on the goods-receipt box (10) has at least one third fastening means (15), which can be positioned in a form-fitting manner around at least some regions of the basic element (21), in particular in the lower region thereof, and can be connected to the basic element (21) in a releasable manner, in particular by a connection established by means of at least one pin/split pin (16), which can be guided in each case through aligned apertures in the third fastening element (15) and the basic element (21).

15. System according to one of preceding Claims 6 to 14, **characterized in that** a number-plate carrier is arranged on the retaining framework (20), in particular on the basic element (21) thereof and/or on the floor element (11) of the goods-receipt box (10).

16. System according to one of preceding Claims 6 to 15, **characterized in that** an anchoring element (17), in particular with a flexible band (17a), is arranged on the goods-receipt box (10), in particular on the floor element (11) thereof, and can be introduced into a gap region between a door, or a luggage-compartment lid, and the vehicle body.

## Revendications

1. Procédé de réception de marchandises à partir d'un entrepôt de distribution ou d'un autre expéditeur, dans lequel une boîte de réception de marchandises (10) est disposée au moins temporairement à l'extérieur sur la carrosserie d'un véhicule utilisé par la personne, et une marchandise requise/souhaitée par la personne est transportée hors de l'entrepôt de distribution ou depuis l'autre expéditeur jusqu'au lieu du véhicule en stationnement et est introduite dans la boîte de réception de marchandises (10), une structure de support (20) est fixée au moins temporairement au véhicule et la boîte de réception de marchandises (10) est fixée au structure de support (20), **caractérisé en ce qu'**une fixation de la boîte de réception de marchandises (10) est réalisée par établissement d'une liaison entre au moins un premier moyen de fixation (24) de la structure de support (20) et au moins un deuxième moyen de fixation (12b) de la boîte de réception de marchandises (20), un verrouillage entre le premier et le deuxième moyen de fixation (24, 12b) étant réalisé par une fermeture et un déverrouillage entre le premier et le deuxième moyen de fixation (24, 12b) par une ouverture d'un couvercle (12c) de la boîte de réception de marchandises (10).

2. Procédé selon la revendication 1, **caractérisé en ce que** les marchandises sont introduites en l'absence de la personne, notamment à l'extérieur du temps de travail d'un employé du service client.

3. Procédé selon l'une quelconque des revendications précédentes, **caractérisé en ce que** la boîte de réception de marchandises (10) est fournie conjointement avec une marchandise sur le lieu du véhicule, en particulier du véhicule automobile, en particulier en présence d'une information qu'aucune boîte de réception de marchandises (10) n'est disposée sur le structure de support (20) sur le véhicule, en particulier le véhicule automobile.

4. Procédé selon l'une quelconque des revendications précédentes, **caractérisé en ce qu'**un code de sécurité pour l'ouverture de la boîte de réception de marchandises (10) est fixé et est communiqué en particulier par télécommunication à au moins un livreur qui travaille à l'entrepôt de distribution, en particulier le code de sécurité étant généré par un dispositif de sécurité de la boîte de réception de marchandises (10) ou par un serveur central et étant transmis d'une unité de communication de la boîte de réception de marchandises (10) ou du serveur central à une unité de communication d'un livreur.

5. Système pour la réception de marchandises au niveau d'un véhicule comprenant une structure de support (20), qui peut être fixée au moins temporairement à un véhicule et une boîte de réception de marchandises (10) qui peut être fixée au moins temporairement au structure de support (20) et qui présente un couvercle (12b) pouvant être ouvert et fermé par des personnes autorisées, **caractérisé en ce que** la structure de support (20) présente au moins un premier moyen de fixation (24) et la boîte de réception de marchandises (10) présente au moins un deuxième moyen de fixation (12b) et les premier et deuxième moyens de fixation (24, 12b) pouvant être reliés les uns aux autres, au moins un élément de verrou (12d) étant en outre disposé sur le couvercle (12c), lequel peut être introduit par fermeture du couvercle (12c) dans les moyens de fixation (24, 12b) et ceux-ci pouvant ainsi être verrouillés.

6. Système selon la revendication 5, **caractérisé en ce que** la boîte de réception de marchandises (10) comprend un élément de fond inférieur (11), en particulier un élément de fond en forme de cuvette (11) et un élément de couvercle supérieur (12) pouvant être ouvert et fermé, des parois latérales (15) pouvant être affaissées, en particulier repliables, s'étendant entre l'élément de fond et l'élément de couvercle.

7. Système selon la revendication 5 ou 6, **caractérisé en ce que** le deuxième moyen de fixation (12b) est disposé sur ou dans le cadre de l'élément de couvercle (12), qui entoure l'ouverture refermable par le couvercle (12c), en particulier au moins deux deuxièmes moyens de fixation (12b) sont disposés sur des côtés opposés du cadre.

8. Système selon la revendication 7, **caractérisé en ce que** l'au moins un deuxième moyen de fixation (12b) est réalisé par un profilé creux (12b), dans lequel peut être introduit un premier moyen de fixation (24) de la structure de support (20).

9. Système selon l'une quelconque des revendications précédentes 6 à 8, **caractérisé en ce que** l'au moins un premier moyen de fixation (24) est réalisé sous forme de bras (24) de la structure de support (20) pouvant pivoter autour d'un axe de rotation, qui peut être introduit dans un deuxième moyen de fixation (12b), en particulier un profilé creux (12b).

10. Système selon l'une quelconque des revendications précédentes 6 à 9, **caractérisé en ce que** la structure de support (20) comprend un élément de base (21), en particulier un cadre de base (21) depuis lequel font saillie au moins trois, de préférence quatre montants (22), en particulier des montants réglables en longueur (22) et des éléments de serrage (23), en particulier des sangles de serrage (23), sont disposés sur l'élément de base (21), en particulier à proximité des zones de liaison des montants (22) à l'élément de base (21), les extrémités libres desquels présentent des éléments de liaison (23a) pour la fixation au véhicule, en particulier au véhicule automobile.

11. Système selon la revendication 10, **caractérisé en ce que** les éléments de liaison (23a) sont réalisés sous forme de crochets (23a) pour venir en prise à chaque fois autour d'un bord sur le véhicule, en particulier le véhicule automobile, notamment d'un bord du couvercle du coffre à bagages ou d'une porte.

12. Système selon l'une quelconque des revendications précédentes 9 ou 11, **caractérisé en ce que** les bras pivotants (24) de la structure de support, lors de l'agencement de l'élément de base (21) dans un plan vertical, présentent un axe de rotation vertical, en particulier peuvent être pivotés d'une position s'appliquant contre l'élément de base (21) dans une position faisant saillie depuis l'élément de base (21).

13. Système selon l'une quelconque des revendications précédentes 6 à 12, **caractérisé en ce que** l'élément de couvercle (12) de la boîte de réception de marchandises (10) présente, en plus de la fixation du couvercle (12c) avec une serrure électromécanique, au moins un élément de fermeture purement mécanique à commande manuelle (12g), avec lequel le couvercle (12c) peut être fixé au cadre.

14. Système selon l'une quelconque des revendications précédentes 6 à 13, **caractérisé en ce que** l'élément de fond (11), en particulier l'élément de fond en forme de cuvette (11), présente sur la boîte de réception de marchandises (10) au moins un troisième moyen de fixation (15) qui peut être placé par engagement par correspondance de formes au moins en partie autour de l'élément de base (21), en particulier dans sa région inférieure et qui peut être connecté de manière amovible à l'élément de base (21), en particulier par une connexion à goupille ou clavette au moyen d'au moins une goupille/clavette (16) qui peut être guidée à chaque fois à travers des évidements en affleurement dans le troisième élément de fixation (15) et l'élément de base (21).

15. Système selon l'une quelconque des revendications précédentes 6 à 14, **caractérisé en ce qu'**un support de plaque d'immatriculation est disposé sur la structure de support (20), en particulier sur son élément de base (21) et/ou sur l'élément de fond (11) de la boîte de réception de marchandises (10).

16. Système selon l'une quelconque des revendications précédentes 6 à 15, **caractérisé en ce qu'**un élément d'ancrage (17), en particulier avec une bande flexible (17a), est disposé sur la boîte de réception de marchandises (10), en particulier sur son élément de fond (11), lequel peut être introduit dans une région d'interstice entre une porte ou un couvercle de coffre à bagages et la carrosserie.
